# EUROPEAN PATENT SPECIFICATION

(11) **EP 3 776 147 B1**
(45) Date of publication and mention of the grant of the patent: **03.04.2024**
(21) Application number: 19726283.5
(22) Date of filing: 13.05.2019
(51) Int. Cl.: G06F 3/01

(54) **ACCELERATED GAZE-SUPPORTED MANUAL CURSOR CONTROL**
BESCHLEUNIGTE BLICKUNTERSTÜTZTE MANUELLE CURSORSTEUERUNG
COMMANDE MANUELLE ACCÉLÉRÉE DE CURSEUR ASSISTÉE PAR LE REGARD

(30) Priority: 22.05.2018 US 201815986529
(43) Date of publication of application: 17.02.2021
(73) Proprietor: Microsoft Technology Licensing, LLC, Redmond, WA 98052-6399 (US)
(72) Inventor: STELLMACH, Sophie, Redmond, Washington 98052-6399 (US); MEEKHOF, Casey Leon, Redmond, Washington 98052-6399 (US); TICHENOR, James R., Redmond, Washington 98052-6399 (US); LINDSAY, David Bruce, Redmond, Washington 98052-6399 (US)
(74) Representative: Page White Farrer
(86) International application number: PCT/US2019/031923
(87) International publication number: WO 2019/226377

(56) References cited:
- US-A1- 2005 243 054
- US-A1- 2010 207 877
- US-A1- 2017 060 230

## Description

### BACKGROUND

With emerging ubiquitous user interfaces (UI), such as smart devices and innovative head-mounted display technology, usage of such UIs becomes more common among non-specialists. Interaction with the UIs may be improved by making the interaction more intuitive and subtle. A well-established input paradigm is point-and-click or in more general terms: point-and-command. In emerging natural UIs, a command could for instance be triggered by different voice commands, hand gestures, or touch input.

An effortless and subtle way to indicate a user's context is to take advantage of gaze tracking data to infer a user's current reference frame. Several problems arise with this approach though, as eye tracking and additional commands are asynchronous (i.e., the eye gaze is usually preceding manual inputs and may have moved on to new targets upon finishing recognition of the manual input). In addition, due to technological constraints of the tracking system as well as physiological constraints of the human visual system, the computed gaze signal may be jittery and show offsets compared to the actual eye gaze. This increases the problem of reliably referring to small and closely positioned targets. Thus, an overall problem arises about how such multimodal inputs can be appropriately combined.

US 2017/0060230 A1 discloses a system for dynamic switching and merging of head, gesture and touch input in virtual reality, in which a virtual object may be selected by a user in response to a first input implementing one of a number of different input modes.

US 2005/0243054 A1 discloses a system and method for selecting a target object using a combination of eye gaze and key presses.

US 2010/0207877 A1 discloses an image generation system. The image generation system includes an eye-tracking system, a bio-feedback sensor capable of detecting activity of one or more physiological functions of the user, and a processor. The processor determines an image to be generated indicative of signals from the eye-tracking system and bio-feedback sensor.

### BRIEF SUMMARY

In one aspect, the present invention provides a method according to claim 1. In another aspect, the present invention provides a head-mounted display according to claim 11. Certain more specific aspects of the invention are set out in the dependent claims.

Additional features and advantages will be set forth in the description which follows, and in part will be obvious from the description, or may be learned by the practice of the teachings herein. Features and advantages of the disclosure may be realized and obtained by means of the instruments and combinations particularly pointed out in the appended claims. Features of the present disclosure will become more fully apparent from the following description and appended claims or may be learned by the practice of the disclosure as set forth hereinafter.

### BRIEF DESCRIPTION OF THE DRAWINGS

In order to describe the manner in which the above-recited and other features of the disclosure can be obtained, a more particular description will be rendered by reference to specific embodiments thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example embodiments, the embodiments will be described and explained with additional specificity and detail through the use of the accompanying drawings in which:
FIG. 1 is a perspective view of a head-mounted display (HMD) including a waveguide;
FIG. 2 is a schematic representation of the HMD of FIG. 1;
FIG. 3 is a flowchart illustrating a method of interacting with a virtual environment in accordance with the invention;
FIG. 4 is a schematic representation of a virtual environment with a first position of a user's gaze location;
FIG. 5 is a schematic representation of a system engagement input and a guidance cursor presented in the virtual environment of FIG. 4;
FIG. 6 is a schematic representation of a target engagement input and the virtual environment of FIG. 5;
FIG. 7 is a schematic representation of a movement input and a guidance cursor movement through the virtual environment of FIG. 6;
FIG. 8 is a schematic representation of a target disengagement input and the virtual environment of FIG. 7;
FIG. 9 is a schematic representation of a system disengagement input and the virtual environment of FIG. 8;
FIG. 10 is a flowchart illustrating another method of interacting with a virtual environment;
FIG. 11 is a schematic representation of a second position of a user's gaze location beyond a threshold distance in a virtual environment;
FIG. 12 is a schematic representation of a guidance cursor translating through the virtual environment of FIG. 11;
FIG. 13 is a flowchart illustrating yet another method of interacting with a virtual environment;
FIG. 14 is a schematic representation of an input device and virtual environment having a plurality of selectable virtual elements;
FIG. 15 is a schematic representation of a guidance cursor snapping to a selectable virtual element;
FIG. 16 is a schematic representation of a guidance cursor stepping to a selectable virtual element from the selectable virtual element of FIG. 15, and

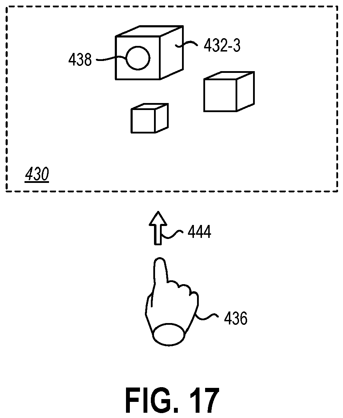

FIG. 17 is a schematic representation of a selection input selecting the selectable virtual element of FIG. 16.

### DETAILED DESCRIPTION

This disclosure generally relates to devices, systems, and methods for visual user interaction with virtual environments. More specifically, the present disclosure relates to improving interaction with virtual elements using gaze-informed manual cursor control. Visual information may be provided to a user by a near-eye display. A near-eye display may be any display that is positioned near a user's eye, either to supplement a user's view of their surroundings, such as augmented or mixed reality devices, or to replace the user's view of their surroundings, such as virtual reality devices. An augmented reality or mixed reality device may be a head-mounted display (HMD) that presents visual information to a user overlaid on the user's view of their surroundings. For example, the visual information from the HMD may be combined with ambient or environment light to overlay visual information, such as text or images, on a user's surroundings.

The user's field of view may be at least partially encompassed by a waveguide through which the user views their surroundings. The waveguide may direct display light from a display device to the user's field of view. The waveguide may guide the display light before out-coupling the light. Upon out-coupling the light, the waveguide may combine the visual information of the display light with ambient light from the user's surroundings to deliver the visual information to the user.

Visual information including virtual environments may be positioned in the user's field of view on the waveguide or other near-eye display. A gaze-tracking device of the HMD may image at least a portion of the user's eye (such as the pupil, the iris, or the sclera) and identify a direction or location of the user's gaze. The direction or location of the user's gaze may then be extrapolated to a position on the near-eye display and/or in the virtual environment. A cursor may be associated with the gaze location to allow the user to highlight or select a position in the virtual environment by looking at that position. In other embodiments, a gaze-tracking device may include a gyroscope, an accelerometer, a plurality of sensors to triangulate position, or other devices that allow for the measurement of the orientation and/or position of the HMD relative to the virtual environment. For example, the user's "gaze" may be a ray cast forward from the HMD to approximate the user's gaze by approximating the user's head position and orientation as their gaze direction. In some examples, such a head-tracking "gaze" may be simpler than an eye-tracking gaze, as the user remains free to glance around in their field of view without inadvertently moving a gaze position cursor. In other examples, an eye-tracking gaze may be more intuitive as a user will naturally look at whatever object is of interest to the user during interactions with the virtual environment.

Gaze-informed manual cursor control, either by eye-tracking gaze or by head-tracking gaze, may allow for rapid manipulation of a user's perspective in a virtual environment. Gaze-informed manual cursor control may be employed in combination with manual, voice, peripheral, or other inputs to provide different scales of movement and manipulation for both speed and precision.

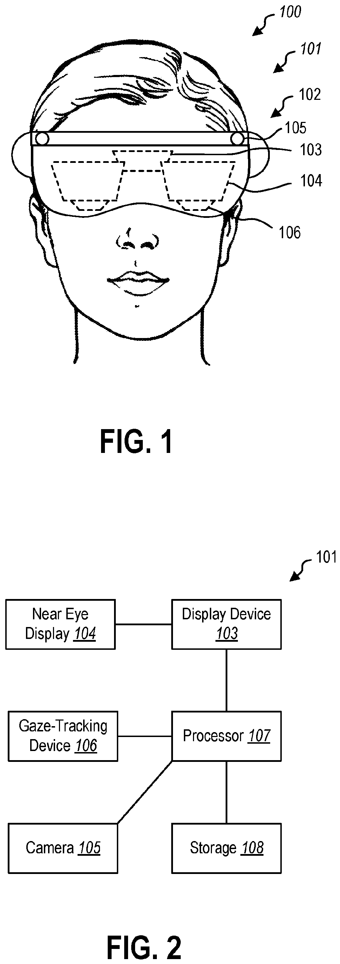

FIG. 1 is a perspective view of a user 100 wearing an HMD 101. The HMD 101 may have a housing 102 that contains one or more processors, storage devices, power supplies, audio devices, display devices, cameras, communication devices, or combinations thereof, that receive, collect, store, process, or calculate information that is provided to the user. For example, a display device 103 may be positioned optically adjacent a waveguide(s) or other near eye display 104 to provide visual information to the near eye display 104, which may, in turn, be presented in the user's field of view by the near eye display 104.

The HMD 101 has a near eye display 104 positioned near the user 100 to direct visual information to the user 100. The HMD 101 may include a single near eye display 104, a separate near eye display 104 for each of the user's eyes (i.e., two near eye displays 104), or more than two near eye displays 104 to provide visual information over a larger field of view.

The HMD 101 includes one or more cameras 105 that may image the user's physical environment. For example, the camera(s) 105 may be a visible light camera(s) 105 that may image the surrounding environment. A processor may perform image recognition routines on the visible light image to detect and recognize elements in the surrounding environment, such as physical objects or people. In other examples, the camera(s) 105 may be depth sensing camera(s) that may create a depth image of the surrounding environment. For example, the camera 105 may be a time-of-flight camera, a structured light camera, stereo cameras, or other cameras that may use visible, infrared, ultraviolet, or other wavelengths of light to collect three-dimensional information about the surrounding environment. The camera(s) 105 are gesture recognition cameras that allow the HMD 101 to recognize and interpret hand gestures performed by the user 100 in front of the HMD 101.

The HMD 101 further includes a gaze-tracking device 106 positioned in the HMD 101 to track a direction of the user's gaze. The gaze-tracking device 106 may include a camera or a plurality of cameras to image the user's eyes. In other words, the gaze-tracking device 106 may image the user's pupil, iris, sclera, other portions of the user's eye, or combinations thereof to calculate the direction the user is looking. In some examples, the gaze-tracking device 106 may measure and/or calculate the x- and y-components of the user's gaze. In other examples, the gaze-tracking device 106 may include a gyroscope, an accelerometer, a plurality of sensors to triangulate position, or other devices that allow for the measurement of the orientation and/or position of the HMD relative to the virtual environment. For example, the user's "gaze" may be a ray cast forward from the HMD to approximate the user's gaze by approximating the user's head position and orientation as their gaze direction.

FIG. 2 is a schematic representation of the HMD 101. The display device 103 in communication with the near eye display 104 is in data communication with a processor 107. Similarly, the camera 105 and gaze-tracking device 106 are in data communication with the processor 107. The processor 107 is further in data communication with a storage device 108. The storage device 108 may be a hardware storage device, such as a platen-based storage device, a solid-state storage device, or other non-transitory or long-term storage device. In accordance with the present invention, the storage device 108 has instructions stored thereon to perform a method of the invention.

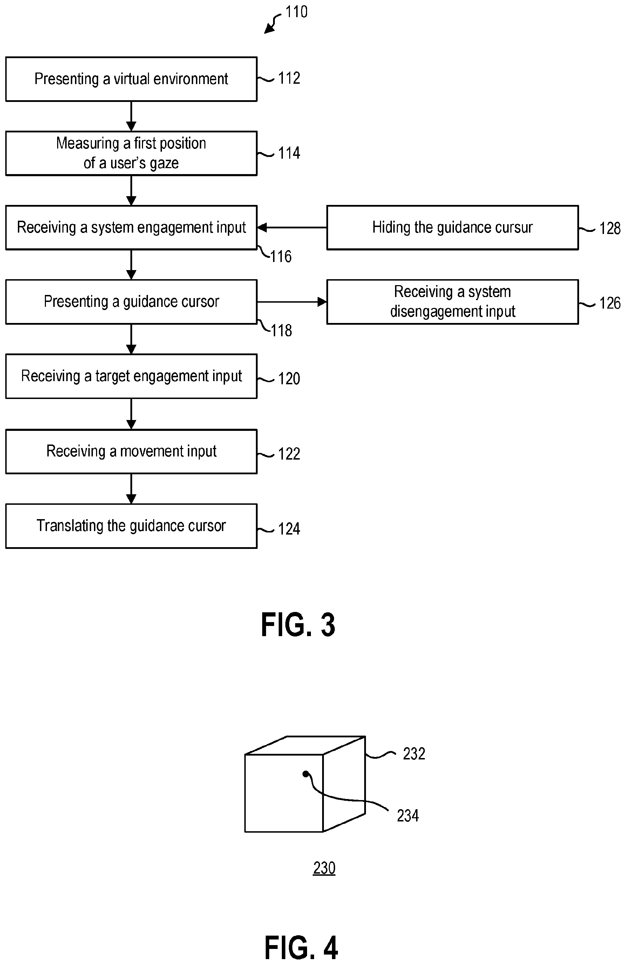

FIG. 3 is a flowchart illustrating a method 110 of interacting with a virtual environment in accordance with the present invention. The method 110 includes presenting a virtual environment to a user at 112. The virtual environment may be a three-dimensional space generated by the HMD or other computing device in communication with the HMD. In other examples, the virtual environment may be part of a shared environment. For example, a mixed reality HMD may present a virtual environment in combination with a surrounding physical environment of the user. In such examples, the HMD may measure the surrounding physical environment of the user using, for example, the cameras on the HMD or other sensors to impart information of the surrounding physical environment into a virtual environment to create a shared environment. The HMD may then use the shared environment to position a virtual element in a virtual environment relative to a physical element of the surrounding physical environment.

While the present disclosure described interaction with the virtual environment through a HMD, it should be understood that in other implementations, the virtual environment may be presented on another display, such as a laptop, tablet, desktop, large format, or other display in communication with a processor and/or a gaze-tracking device. For example, the methods and systems described herein may be equally applicable to a user interacting with a large format display on a wall of a conference room. The user may control cursor positions within a virtual environment using a gaze-tracking device and other input devices in communication with the large format display. In other examples, a laptop, smartphone, tablet, or other personal electronic device may have a front facing camera that may function as a gaze-tracking device to allow gaze-based movement and/or manipulation of virtual elements by a user interacting with the laptop, smartphone, tablet, or other personal electronic device. In yet other examples, a laptop, smartphone, tablet, or other personal electronic device may have a front facing camera that may function as a gaze-tracking device to allow gaze-based movement and/or manipulation of virtual elements by a user interacting with another display, such as a large format display on a wall of conference room.

The method 110 includes measuring a first position of a user's gaze location at 114. The first position may be measured by using a gaze-tracking device described herein to measure the position of either the user's gaze based on eye-tracking or the user's gaze based on heading tracking. At this point in the method 110, no marker or cursor is presented to the user to indicate a position of the user's gaze location. The first position of the user's gaze location is measured by the gaze-tracking device without reporting the first position to the user to minimize distraction or interference with the user's experience with the virtual environment.

The method 110 further includes receiving system engagement input from an input device at 116 and subsequently presenting a guidance cursor at the first position at 118. The input device may be a gesture recognition device, such as the camera(s), in data communication with the processor of the HMD. In other implementations, the input device may be a voice recognition device, such as a microphone, in data communication with the processor of the HMD. In yet other implementations, the input device may be a peripheral controller, such as a six degree-of-freedom (6DOF) controller or other motion-sensing controller, in data communication with the processor of the HMD. In yet other implementations, the input device may be an input of a touch-sensing device, trackpad, mouse, keyboard or other conventional human interface device (HID) of a computer.

The system engagement input may be a one-handed gesture. For example, the system engagement input may be the user raising a hand into a field of view of the user and/or the gesture recognition device. In another implementation, the system engagement input may be a two-handed gesture, such as the user raising two hands into a field of view of the user and/or the gesture recognition device. In yet other implementations, the system engagement input may be a voice input, such as a voice recognition device detecting and identifying the user stating "engage" or other system engagement input. In further implementations, the system engagement input may be a peripheral controller input. For example, the system engagement input may be the user raising a 6DOF motion controller in front of the user. In other examples, the system engagement input may be the user depressing a first button on a peripheral controller. In yet further implementations, the system engagement input may be a button depress or click of a touch-sensing device, trackpad, mouse, keyboard or other conventional HID.

The guidance cursor may be presented by the display device, such as on a near-eye display, upon receipt of the system engagement input. The guidance cursor has a cursor diameter. The cursor diameter defines an area around the first position of the user's gaze location. The user's gaze location may be jittery or be otherwise imprecise due to small movements or tremors of the user's eye or due to systemic limitations of the gaze-tracking device. The guidance cursor diameter is related to the gaze cloud of the user's gaze locations measured over a period of time.

The method 110 further includes receiving a target engagement input from an input device at 120, which decouples the guidance cursor from the first position and from the user's gaze location, and receiving a movement input from an input device at 122. Upon receiving the movement input, the method 110 further includes translating the guidance cursor relative to the first position based on the movement input at 124.

The target engagement input may be received from the same input device as the system engagement input. For example, the system engagement input may be received from a gesture recognition device upon recognizing the user raising their hand, and the target engagement input may be received from the same gesture recognition device upon recognizing the user tapping downward with a finger of their hand. In other implementations, the system engagement input may be received from a first input device and the target engagement input may be received from a different second input device. For example, the system engagement input may be received from a gesture recognition device upon recognizing the user raising their hand, and the target engagement input may be received from a touch-sensing device that is tapped by a user's other hand.

The movement input may be received from the same input device as the target engagement input and/or the system engagement input. For example, the target engagement input may be received from a gesture recognition device upon recognizing the user tapping downward with a finger of their hand, and the movement input may be received from the same gesture recognition device upon recognizing the user moving their hand while their finger remains in the downward position. In other implementations, the target engagement input may be received from a first input device and the movement input may be received from a different second input device. For example, the target engagement input may be received from a voice recognition device recognizing a user's voice command, and the movement input may be received from a user's finger moving across a touch-sensing device.

The target engagement input may be a downward tap of a user's finger (as though to depress a button). In at least another example, the target engagement input may be a pinching motion of a user's finger and thumb together (as though to grab the virtual environment in the first position). The target engagement input may be recognized by a gesture recognition device and may set a null point or origin for the movement input. The movement input may be a movement of the user's hand relative to the null point.

For example, a user may move their hand upward (e.g., relative to the null point) to move the guidance cursor upward in the virtual environment relative to the first position. In other examples, a user may move their hand backward (e.g., toward the user and/or away from the display) to "pull" the guidance cursor toward the user. The user may then cease the target engagement input to terminate the continuous measurement of the movement input and stop moving the guidance cursor. For example, the user may lift their finger (as though releasing the button) or relax their finger and thumb (as though releasing a grasp on the virtual environment).

The movement input may be received from a touch-sensing device. For example, the touch sensing device may be a single touch device, such as a conventional trackpad. For a single touch device, the movement input may be continuous input in which a user performs a target engagement input and the movement input is continuously or substantially continuously recognized by the trackpad. In at least one example, the target engagement input may be a downward tap of a user's finger on the trackpad. The target engagement input may be recognized by the trackpad and may set a null point or origin for the movement input. The movement input may be a movement of the user's hand relative to the null point on the trackpad. The user may then cease the target engagement input to terminate the continuous measurement of the movement input. For example, the user may lift their finger from the trackpad.

The movement input may be provided by a motion controller, such as a 6DOF peripheral controller or an infrared camera tracked motion controller. For example, the movement input may be continuous input in which a user performs a target engagement input and the movement input is continuously or substantially continuously recognized by the motion controller. In at least one example, the target engagement input may be a press of a button on the motion controller that is held down while inputting the movement input. The target engagement input may be recognized by a gesture recognition device and may set a null point or origin for the movement input. The movement input may be a movement of the motion controller relative to the null point.

For example, a user may move the motion controller (e.g., away from the user and/or toward the display) to "push" the guidance cursor away from the user. In other examples, a user may move the motion controller downward to move the guidance cursor downward relative to the first position. The user may then cease the target engagement input to terminate the continuous measurement of the movement input.

The movement input may be voice input. For example, the movement input may be received from a voice recognition device that recognizes or interprets speech from a user. The movement input may be discrete inputs. For example, the voice recognition device may detect a percentage voice command of "move left". In other examples, the voice recognition device may detect a distance voice command of "move right two cursors", to move the cursor a distance based on the cursor diameter. In yet other examples, the voice recognition device may detect and open-ended voice command such as "begin moving upward" until the voice recognition device detects a termination voice command such as "stop".

The movement input may be received from a mouse. For example, the mouse may provide a toggle input for a target engagement input, such as clicking the scroll wheel of the mouse. Clicking or holding the scroll wheel down may provide the target engagement input. The movement input may be a movement of the scroll wheel. For example, scrolling the scroll wheel forward may move the guidance cursor upward in the virtual environment. In other examples, scrolling the scroll wheel backwards may move the guidance cursor downward in the virtual environment. The user may then cease the target engagement input to terminate the continuous measurement of the movement input.

In yet other implementations, the input device may include foot pedals, brain scan interfaces, or other input devices from the user to the processor or other computing device in communication with the HMD.

The method 110 may further include a system disengagement input at 126. The system disengagement input may be the same as the system engagement input to toggle the system engagement off. For example, the system engagement input may be a click of a mouse and the system disengagement input may be a second click of the mouse. In other embodiments, the system engagement input may be a discrete command. For example, the system engagement input may be a voice command of "engage" recognized by a voice recognition system, and the system disengagement input may be a voice command of "disengage" recognized by the voice recognition system. In yet other embodiments, the system disengagement input may be the termination of the system engagement input. For example, the system engagement input may be a gesture input of the user's raising their hand recognized by a gesture recognition system, and the system disengagement input may be the termination of the raised hand when the user lowers their hand and the gesture recognition system no longer recognizes the presence of the user's hand.

Upon receiving the system disengagement input, the method 110 may further including hiding the guidance cursor at 128 to allow the user to freely view the virtual environment without the distraction and/or interference of the guidance cursor.

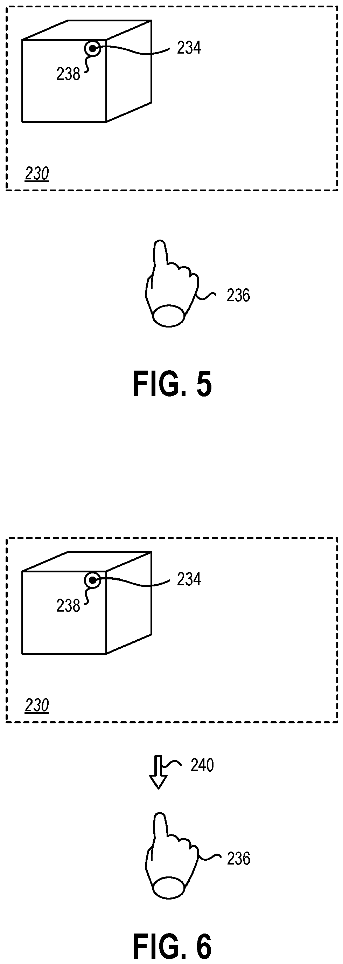

FIG. 4 through FIG. 9 illustrate an example of the method described in relation to FIG. 3. FIG. 4 illustrates a virtual environment 230. The virtual environment 230 may include one or more virtual elements 232 and/or other selectable objects with which the user may interact. A gaze-tracking device, such as described in relation to FIG. 1 or FIG. 2 may detect a first position 234 of a user's gaze location. The first position 234, however, may not be presented to a user in the virtual environment until a system engagement input is received, as shown in FIG. 5.

The system engagement input may be received from an input device 236. In some implementations, the system engagement input may be received from a gesture-recognition device, which in FIG. 5 is schematically represented as the user's hand. Upon detecting the presence of the user's hand raised toward the virtual environment 230, a guidance cursor 238 may be presented at the first position 234.

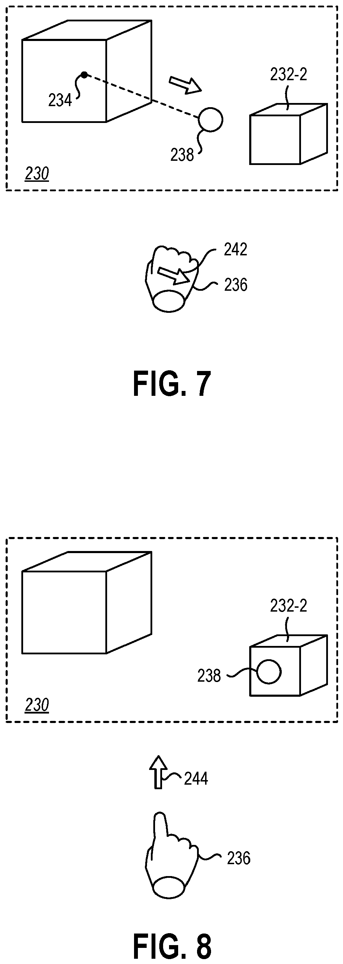

FIG. 6 illustrates an example of a target engagement input 240 from the input device 236. Upon receipt of the target engagement input 240, the location of the guidance cursor 238 may be decoupled from the first position 234 and/or the gaze location within the virtual environment 230, as shown in FIG. 7. The location of the guidance cursor 238 in the virtual environment 230 may be refined by a movement input 242 of the input device 236. The guidance cursor 238 may translate through the virtual environment to, for example, a second virtual element 232-2.

Upon moving the guidance cursor 238 to the desired location using the input device 236, the input device 236 may provide a target disengagement input 244. In some embodiments, the target disengagement input 244 may select the virtual element or other selectable object in the virtual environment 230. For example, the gaze location may be imprecise and not reliable allow the selection a virtual element. The target engagement input, as described herein, may allow the user to decouple the guidance cursor 238 from the gaze location and move the guidance cursor with the input device 236 to a desired selectable object, such as the second virtual element 232-2, and then select that selectable object by providing a target disengagement input 244 (e.g., releasing the target engagement input).

A selectable object may be communicated to the user by changing the appearance or presentation of the guidance cursor 238 upon positioning the guidance cursor 238 over the selectable object during movement of the guidance cursor 238 using the input device 236.

For example, the guidance cursor 238 may change in shape, such as changing from a circle to a hand cursor, a cross cursor, a crosshair cursor, a diamond cursor, or other change in shape, upon moving over the second virtual element 232-2 to indicate that the second virtual element 232-2 may be "clicked on" or other be selectable. In other examples, the guidance cursor 238 may remain the same shape and change in size (e.g., pulsate larger and smaller) to indicate interactivity, change in color, gain a halo, or exhibit another visual indicator. In yet other examples, the input device may provide information to the user that the second virtual element 232-2 is selectable, such as a motion controller or touch-sensing device providing haptic feedback upon moving the guidance cursor 238 over a selectable object.

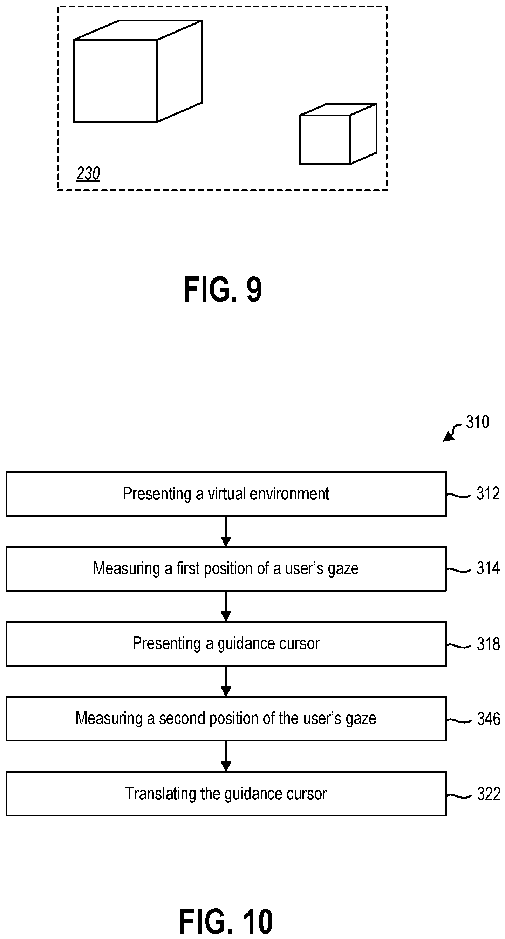

FIG. 9 illustrates an example of a user lowering their hand or otherwise providing a system disengagement input to disengage the input device and hide the guidance cursor in the virtual environment 230.

As described herein, the input device may allow more precise positioning of the guidance cursor than may be possible with the gaze-tracking device alone. However, the manual positioning of the guidance cursor using the input device and not the gaze-tracking device may move the guidance cursor more slowly than the gaze location-based positioning. The guidance cursor may be presented in the virtual environment and subsequently translated smoothly through the virtual environment to the user's gaze location when the user's gaze location moves sufficiently far from the guidance cursor.

FIG. 10 is a flowchart illustrating another method 310 of interacting with a virtual environment. The method 310 may include presenting a virtual environment at 312, measuring a first position of a user's gaze location at 314, and presenting a guidance cursor at 318, similar to the method described in relation to FIG. 3. The method 310 may further include measuring a second position of the user's gaze location at 346 and, when the second position is beyond a threshold distance from the guidance cursor, translating the guidance cursor through the virtual environment to the second position at 322.

The threshold distance may be at least 2° away from the guidance cursor relative to the user's perspective on the virtual environment. For example, the threshold distance may be 3° away from the guidance cursor. The threshold distance may be at least 4° away from the guidance cursor. The threshold distance may be at least 6° away from the guidance cursor (e.g., outside the user's peripheral vision when looking at the guidance cursor). The threshold distance may be at least 10° from the guidance cursor.

The guidance cursor may translate through the virtual environment to the second location. A guidance cursor that instantaneously moves between locations in the virtual environment may be disorienting or fatiguing to a user over extend use sessions. A smoothly translating guidance cursor may be more intuitive to control and more comfortable for a user viewing the virtual environment.

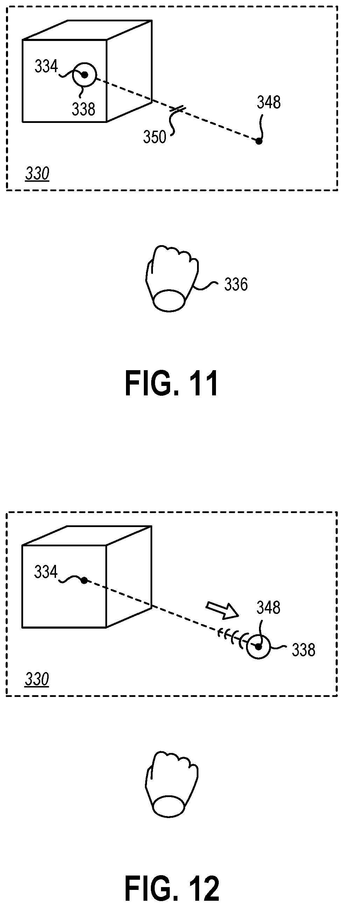

FIG. 11 is a schematic representation of a virtual environment 330 with a guidance cursor 336 presented at a first position 334 of a user's gaze location. The user may direct their gaze toward another portion of the virtual environment. Upon detection of the user's gaze location at a second position 348 beyond a threshold distance 350, the guidance cursor may move to the second position 348.

In some examples, the guidance cursor 336 may initially be located at the first position 334. In other examples, the guidance cursor 336 may be moved relative to the first position 334 by a movement input of an input device 334. The threshold distance 350, therefore, may be calculated from the guidance cursor 336.

Referring now to FIG. 12, the guidance cursor 336 may move from the first position 334 (or other starting location of the guidance cursor 336) and translate smoothly to the second location 348 through the virtual environment 330 without input from the input device 334.

Translating the guidance cursor 336 smoothly through the virtual environment 330 may include moving the guidance cursor with a constant velocity. In other examples, the guidance cursor 336 may translate with a varying speed. For example, the guidance cursor 336 may move with a maximum speed through a portion of the translation and slow upon approaching the second location 336.

In some examples, the guidance cursor 336 may translate at no more than 3° per second (3°/s). For example, the guidance cursor 336 may translate at a constant 3°/s. In other examples, the guidance cursor 336 may translate at 3°/s for a portion of the translation and at a slower speed for another portion of the translation. In other examples, the guidance cursor 336 may translate at no more than 6°/s. In yet other examples, the guidance cursor 336 may translate at no more than 9°/s.

The guidance cursor 336 may move at the maximum speed for 90% of the translation and then slow in the last 10% approaching the second location 348. In other examples, the guidance cursor 336 may move at the maximum speed for 95% of the translation and then slow in the last 10% approaching the second location 348. In yet other examples, the guidance cursor 336 may move at the maximum speed for 98% of the translation and then slow in the last 10% approaching the second location 348.

In other examples, the guidance cursor 336 may translate to the second location 348 in a duration of time irrespective of the distance. For example, the guidance cursor 336 may translate to the second location 348 in no more than 0.5 seconds. In other examples, the guidance cursor 336 may translate to the second location 348 in no more than 0.25 seconds. In yet other examples, the guidance cursor 336 may translate to the second location 348 in no more than 0.1 seconds.

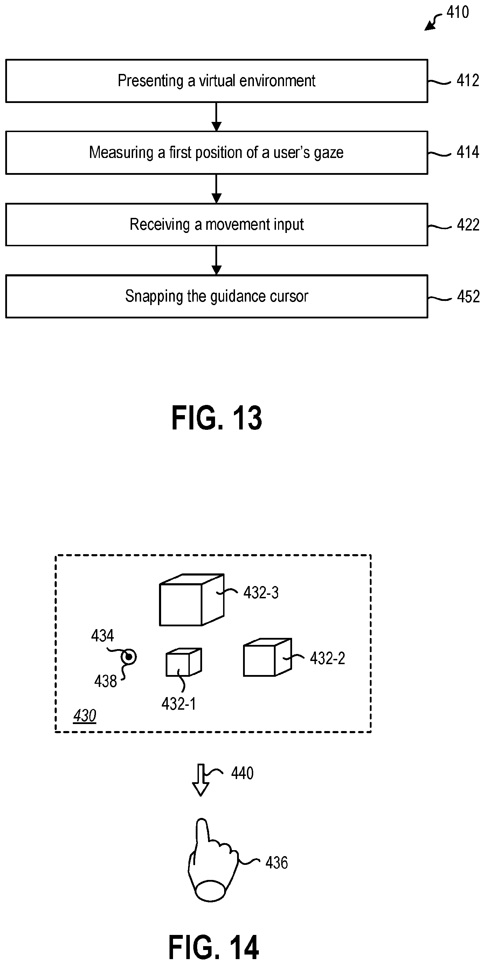

To further increase the precise of the guidance cursor placement, the guidance cursor may snap to a selectable object in the virtual environment. For example, FIG. 13 is a flowchart illustrating a method 410 of interacting with a virtual environment by snapping a guidance cursor between selectable objects.

The method 410 may include presenting a virtual environment to a user at 412, measuring a first position of a user's gaze location at 414, and receiving a movement input at 422 similar to the method described in relation to FIG. 3. The method 410 may further include snapping a guidance cursor to a selectable virtual element in the direction of the movement input at 452. For example, a movement input having an associated direction may be received from an input device and the guidance cursor may move to the nearest selectable virtual element in that direction. The guidance cursor may be subsequently moved to other selectable virtual elements by additional movement inputs.

The movement inputs may be discrete movement inputs. For example, the discrete movement input may be received from a gesture recognition device and the discrete movement input may be a pointing gesture of a user's hand or a flick gesture of the user's head in a direction. In other examples, the discrete movement input may be received from a voice recognition device and the discrete movement input may be a voice command of "move up", "step left", "snap right", or the like. In yet other examples, the discrete movement input may be received from a 6DOF motion controller and the discrete movement input may be a tilt of the 6DOF motion controller in a direction toward a selectable virtual element. In further examples, the discrete movement input may be received from a touch-sensing device and the discrete movement input may be a finger dragged across the touch-sensing device in a direction toward a selectable virtual element. In yet further examples, the discrete movement input may be received from other input devices that provide a directional component to a movement input.

FIG. 14 illustrates an example of a virtual environment 430 and an input device 436, which is represented schematically by a user's hand. A guidance cursor 438 may be presented in the virtual environment 430 at the first position 434. In some examples, the tracking of the user's gaze may be insufficient to precisely locate the guidance cursor 438 on the desired virtual element of a plurality of virtual elements 432-1, 432-2, 432-3. In other examples, a virtual element may be a small object that is difficult to select with the precision of the gaze-tracking device. The method may optionally include receiving a target engagement input 440 prior to the movement input to decouple the guidance cursor 438 from the first position 434.

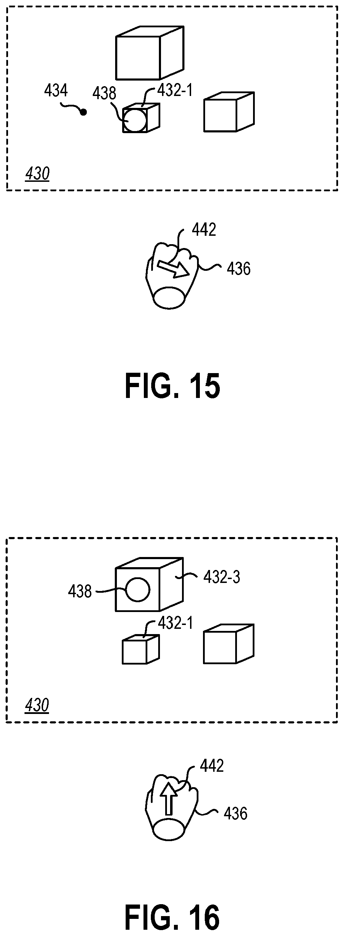

FIG. 15 shows the movement input 442 from the input device 436 that snaps the guidance cursor 438 from the first position 434 to the nearest selectable virtual element 432-1 in the virtual environment 430. The guidance cursor 438 may snap to a selectable virtual element within a maximum range from initial position of the guidance cursor 438. For example, a selectable virtual element may exist in the virtual environment 430 far to the left of the virtual elements 432-1, 432-2, 432-3 illustrated in FIG. 15. The user may not intend to have the guidance cursor 438 leap outside the user's field of view of the virtual environment 430.

The guidance cursor 438 may snap to a selectable virtual element only within the user's field of view of the virtual environment. In other examples, the guidance cursor 438 may snap to a selectable virtual element within 10° of the guidance cursor 438 relative to the user's perspective. In yet other embodiments, the guidance cursor 438 may snap to a selectable virtual element within 6° of the guidance cursor 438 relative to the user's perspective. For example, the selectable virtual element to which the user intends to snap the guidance cursor 438 may be within the user's peripheral vision of the guidance cursor 438. In further embodiments, the guidance cursor 438 may snap to a selectable virtual element within 3° of the guidance cursor 438 relative to the user's perspective. For example, the selectable virtual element to which the user intends to snap the guidance cursor 438 may be within the user's foveal vision. In yet further embodiments, the guidance cursor 438 may snap only to a selectable virtual element at least partially within a cursor area of the guidance cursor 438. For example, the guidance cursor 438 may have a cursor area within a border of the guidance cursor 438 that provides visual feedback as to the virtual elements that may be selected via a snapping functionality.

FIG. 16 illustrates stepping between virtual elements using discrete movement inputs. The input device 436 may provide a step input that is a discrete movement input 442 such that the guidance cursor 438 moves in a step direction of the step input from the first selectable virtual element 432-1 to a third selectable virtual element 432-3 of the virtual environment 430. In this manner, a user may "step" through a series of selectable virtual elements until the guidance cursor 438 is positioned on the desired selectable virtual element.

Upon positioning the guidance cursor 438 on the desired selectable virtual element, such as the third virtual element 432-3 shown in the virtual environment 430, the input device 436 may provide a target disengagement input 444 or other selection input to terminate movement and select the third virtual element 432-3 or any other virtual element on which the guidance cursor 438 is positioned.

The articles "a," "an," and "the" are intended to mean that there are one or more of the elements in the preceding descriptions. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element described in relation to an embodiment herein may be combinable with any element of any other embodiment described herein. Numbers, percentages, ratios, or other values stated herein are intended to include that value, and also other values that are "about" or "approximately" the stated value, as would be appreciated by one of ordinary skill in the art encompassed by embodiments of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01% of a stated value.

It should be understood that any directions or reference frames in the preceding description are merely relative directions or movements. For example, any references to "front" and "back" or "top" and "bottom" or "left" and "right" are merely descriptive of the relative position or movement of the related elements.

## Claims

1. A method for improving user interaction with a virtual environment (230), the method comprising:
presenting (112) a virtual environment (230) to a user;
measuring (114) a first position (234) of the user's gaze relative to the virtual environment (230) without presenting a marker or cursor to the user to indicate a position of the user's gaze location;
receiving (116) a system engagement input;
upon receipt of the system engagement input, presenting (118) a guidance cursor (238) at the first position (234), the guidance cursor (238) having a diameter related to a gaze cloud of the user's gaze locations measured over a period of time;
receiving (120) a target engagement input (240) and decoupling the guidance cursor (238) from the user's gaze;
after receiving the target engagement input, receiving (122) a movement input (242); and
translating (124) the guidance cursor (238) based on the movement input (242).

2. The method of claim 1, the system engagement input and the target engagement input (240) being received from a single input device (236).

3. The method of claim 2, the movement input (242) being received from the single input device.

4. The method of any preceding claim, further comprising:
receiving (126) a system disengagement input (244); and
upon receiving the system disengagement input (244), hiding (128) the guidance cursor (238).

5. The method of any preceding claim, wherein the movement input has a movement direction; and
wherein translating the guidance cursor comprises snapping (452) the guidance cursor on a first selectable object (432-1) in the virtual environment where the first selectable object is in the movement direction relative to the first position.

6. The method of claim 5, the movement input being received from a gesture recognition device.

7. The method of claim 5 or claim 6, the guidance cursor (438) having a cursor area and snapping the guidance cursor (438) to a first selectable object (432-1) including snapping the guidance cursor (438) to a first selectable object (432-1) within the cursor area.

8. The method of any of claims 5 to 7, further comprising:
receiving a step input having a step direction (442), and
moving the guidance cursor (438) from the first selectable object (432-1) to a second selectable object (432-2) in the step direction relative to the first selectable object (432-1).

9. The method of claim 8, the movement input (242) and the step input being received from a single input device.

10. The method of any of claims 5 to 9, snapping the guidance cursor (438) on a first selectable object (432-1) including snapping the guidance cursor on a first selectable object (432-1) within 6° of the guidance cursor (438) relative to the user's perspective.

11. A head-mounted display (101), comprising:
a display device (103);
a near eye display (104) in communication with the display device (103);
a camera (105), the camera (105) being a gesture recognition camera;
a gaze-tracking device (106);
a processor (107); and
a storage device (108);
wherein the near eye display (104), camera (105), gaze tracking device (106) and storage device (108) are in data communication with the processor;
wherein the storage device (108) stores instructions which, when executed by the processor (107), cause the head-mounted display (101) to perform the method of any preceding claim, in which method the display device (103) and near eye display (104) are adapted to present the virtual environment (230) to the user; the gaze tracking device (106) is adapted to measure the first position of the user's gaze; and the gesture recognition camera (105) is adapted to receive the system engagement input, the target engagement input (240), and the movement input (242).

## Patentansprüche

1. Verfahren zum Verbessern der Interaktion eines Benutzers mit einer virtuellen Umgebung (230), wobei das Verfahren umfasst:
Präsentieren (112) einer virtuellen Umgebung (230) für einen Benutzer;
Messen (114) einer ersten Position (234) des Blicks des Benutzers relativ zu der virtuellen Umgebung (230), ohne dem Benutzer eine Markierung oder einen Cursor zu präsentieren, um eine Position des Standorts des Blicks des Benutzers zu lokalisieren;
Empfangen (116) einer Systemaktivierungseingabe;
nach Empfang der Systemaktivierungseingabe Präsentieren (118) eines Führungscursors (238) an der ersten Position (234), wobei der Führungscursor (238) einen Durchmesser aufweist, der in Relation zu einer über eine Zeitperiode gemessenen Blickwolke der Blickstandorte des Benutzers steht;
Empfangen (120) einer Zielaktivierungseingabe (240) und Entkoppeln des Führungscursors (238) vom Blick des Benutzers;
nach dem Empfangen der Zielaktivierungseingabe Empfangen (122) einer Bewegungseingabe (242); und
Verschieben (124) des Führungscursors (238) basierend auf der Bewegungseingabe (242).

2. Verfahren nach Anspruch 1, wobei die Systemaktivierungseingabe und die Zielaktivierungseingabe (240) von einer einzigen Eingabevorrichtung (236) empfangen werden.

3. Verfahren nach Anspruch 2, wobei die Bewegungseingabe (242) von der einzigen Eingabevorrichtung empfangen wird.

4. Verfahren nach einem vorstehenden Anspruch, ferner umfassend:
Empfangen (126) einer Systemdeaktivierungseingabe (244); und
nach dem Empfangen der Systemdeaktivierungseingabe (244) Ausblenden (128) des Führungscursors (238).

5. Verfahren nach einem der vorhergehenden Ansprüche, wobei die Bewegungseingabe eine Bewegungsrichtung aufweist; und
wobei das Verschieben des Führungscursors das Festhalten (452) des Führungscursors auf einem ersten auswählbaren Objekt (432-1) in der virtuellen Umgebung umfasst, wobei sich das erste auswählbare Objekt in der Bewegungsrichtung relativ zu der ersten Position befindet.

6. Verfahren nach Anspruch 5, wobei die Bewegungseingabe von einer Gestenerkennungsvorrichtung empfangen wird.

7. Verfahren nach Anspruch 5 oder Anspruch 6, wobei der Führungscursor (438) einen Cursorbereich aufweist und das Festhalten des Führungscursors (438) an einem ersten auswählbaren Objekt (432-1) das Festhalten des Führungscursors (438) an einem ersten auswählbaren Objekt (432-1) innerhalb des Cursorbereichs einschließt.

8. Verfahren nach einem der Ansprüche 5 bis 7, ferner umfassend:
Empfangen einer Schritteingabe, die eine erste Schrittrichtung (442) aufweist, und
Bewegen des Führungscursors (438) von dem ersten auswählbaren Objekt (432-1) zu einem zweiten auswählbaren Objekt (432-2) in der Schrittrichtung relativ zu dem ersten auswählbaren Objekt (432-1).

9. Verfahren nach Anspruch 8, wobei die Bewegungseingabe (242) und die Schritteingabe von einer einzigen Eingabevorrichtung empfangen werden.

10. Verfahren nach einem der Ansprüche 5 bis 9, wobei das Festhalten des Führungscursors (438) auf einem ersten auswählbaren Objekt (432-1) das Festhalten des Führungscursors auf einem ersten auswählbaren Objekt (432-1) innerhalb von 6° des Führungscursors (438) relativ zu der Perspektive des Benutzers einschließt.

11. Am Kopf befestigte Anzeige (101), umfassend:
eine Anzeigevorrichtung (103);
eine augennahe Anzeige (104) in Verbindung mit der Anzeigevorrichtung (103);
eine Kamera (105), wobei die Kamera (105) eine Gestenerkennungskamera ist;
eine Blickverfolgungsvorrichtung (106);
einen Prozessor (107); und
eine Speichervorrichtung (108);
wobei die augennahe Anzeige (104), die Kamera (105), die Blickverfolgungsvorrichtung (106) und die Speichervorrichtung (108) in Datenkommunikation mit dem Prozessor stehen;
wobei die Speichervorrichtung (108) Befehle speichert, die bei Ausführung durch den Prozessor (107) bewirken, dass die am Kopf befestigte Anzeige (101) das Verfahren nach einem der vorhergehenden Ansprüche durchführt, wobei die Anzeigevorrichtung (103) und die augennahe Anzeige (104) so beschaffen sind, dass sie dem Benutzer die virtuelle Umgebung (230) präsentieren; die Blickverfolgungsvorrichtung (106) so beschaffen ist, dass sie die erste Position des Blicks des Benutzers misst; und die Gestenerkennungskamera (105) so beschaffen ist, dass sie die Systemaktivierungseingabe, die Zielaktivierungseingabe (240) und die Bewegungseingabe (242) empfängt.

## Revendications

1. Procédé d'amélioration d'une interaction d'utilisateur avec un environnement virtuel (230), le procédé comprenant :
la présentation (112) d'un environnement virtuel (230) à un utilisateur ;
la mesure (114) d'une première position (234) du regard de l'utilisateur par rapport à l'environnement virtuel (230) sans présenter de marqueur ni de curseur à l'utilisateur pour indiquer une position de l'emplacement de regard de l'utilisateur ;
la réception (116) d'une entrée d'engagement avec le système ;
lors de la réception de l'entrée d'engagement avec le système, la présentation (118) d'un curseur de guidage (238) au niveau de la première position (234), le curseur de guidage (238) présentant un diamètre lié à un nuage de regards des emplacements de regard de l'utilisateur mesurés sur une période ;
la réception (120) d'une entrée d'engagement cible (240) et le découplage du curseur de guidage (238) d'avec le regard de l'utilisateur ;
après la réception de l'entrée d'engagement cible, la réception (122) d'une entrée de déplacement (242) ; et
la translation (124) du curseur de guidage (238) sur la base de l'entrée de déplacement (242).

2. Procédé selon la revendication 1, l'entrée d'engagement avec le système et l'entrée d'engagement cible (240) étant reçues à partir d'un dispositif d'entrée unique (236).

3. Procédé selon la revendication 2, l'entrée de déplacement (242) étant reçue à partir du dispositif d'entrée unique.

4. Procédé selon l'une quelconque des revendications précédentes, comprenant en outre :
la réception (126) d'une entrée de désengagement avec le système (244) ; et
lors de la réception de l'entrée de désengagement avec le système (244), le masquage (128) du curseur de guidage (238).

5. Procédé selon l'une quelconque des revendications précédentes, dans lequel l'entrée de déplacement présente une direction de déplacement ; et
dans lequel la translation du curseur de guidage comprend l'alignement (452) du curseur de guidage sur un premier objet sélectionnable (432-1) dans l'environnement virtuel où le premier objet sélectionnable est dans la direction de déplacement par rapport à la première position.

6. Procédé selon la revendication 5, l'entrée de déplacement étant reçue à partir d'un dispositif de reconnaissance de geste.

7. Procédé selon la revendication 5 ou la revendication 6, le curseur de guidage (438) présentant une zone de curseur et l'alignement du curseur de guidage (438) avec un premier objet sélectionnable (432-1) comprenant l'alignement du curseur de guidage (438) sur un premier objet sélectionnable (432-1) au sein de la zone de curseur.

8. Procédé selon l'une quelconque des revendications 5 à 7, comprenant en outre :
la réception d'une entrée d'étape présentant une direction d'étape (442), et
le déplacement du curseur de guidage (438), du premier objet sélectionnable (432-1) vers un second objet sélectionnable (432-2) dans la direction d'étape par rapport au premier objet sélectionnable (432-1).

9. Procédé selon la revendication 8, l'entrée de déplacement (242) et l'entrée d'étape étant reçues à partir d'un dispositif d'entrée unique.

10. Procédé selon l'une quelconque des revendications 5 à 9, l'alignement du curseur de guidage (438) sur un premier objet sélectionnable (432-1) comprenant l'alignement du curseur de guidage sur un premier objet sélectionnable (432-1) à 6° ou moins du curseur de guidage (438) par rapport à la perspective de l'utilisateur.

11. Afficheur de tête (101) comprenant :
un dispositif d'affichage (103) ;
un afficheur près de l'œil (104) en communication avec le dispositif d'affichage (103) ;
une caméra (105), la caméra (105) étant une caméra de reconnaissance de geste ;
un dispositif de suivi du regard (106) ;
un processeur (107) ; et
un dispositif de stockage (108) ;
dans lequel l'afficheur près de l'œil (104), la caméra (105), le dispositif de suivi du regard (106) et le dispositif de stockage (108) sont en communication de données avec le processeur ;
dans lequel le dispositif de stockage (108) stocke des instructions qui, lorsqu'elles sont exécutées par le processeur (107), amènent l'afficheur de tête (101) à réaliser le procédé selon l'une quelconque des revendications précédentes, procédé dans lequel le dispositif d'affichage (103) et l'afficheur près de l'œil (104) sont adaptés pour présenter l'environnement virtuel (230) à l'utilisateur ; le dispositif de suivi du regard (106) est adapté pour mesurer la première position du regard de l'utilisateur ; et la caméra de reconnaissance de geste (105) est adaptée pour recevoir l'entrée d'engagement avec le système, l'entrée d'engagement cible (240), et l'entrée de déplacement (242).
